# EUROPÄISCHE PATENTSCHRIFT

(11) **EP 2 381 880 B1**
(45) Veröffentlichungstag und Bekanntmachung des Hinweises auf die Patenterteilung: **26.03.2014**
(21) Anmeldenummer: 09795694.0
(22) Anmeldetag: 04.12.2009
(51) Int. Cl.: A61C 7/28

(54) **SELBSTLIGIERENDES BRACKET FÜR DIE ORTHODONTIE**
SELF-LIGATING BRACKET FOR ORTHODONTICS
VERROU À LIAISON AUTOMATIQUE POUR L'ORTHODONTIE

(30) Priorität: 05.12.2008 DE 102008060820
(43) Veröffentlichungstag der Anmeldung: 02.11.2011
(73) Patentinhaber: Bernhard Förster GmbH, 75172 Pforzheim (DE)
(72) Erfinder: FÖRSTER, Rolf, 75173 Pforzheim (DE)
(74) Vertreter: Twelmeier Mommer & Partner
(86) Internationale Anmeldenummer: PCT/EP2009/008690
(87) Internationale Veröffentlichungsnummer: WO 2010/063485

(56) Entgegenhaltungen:
- WO-A1-99/40871
- WO-A1-2009/015157
- WO-A2-2009/006286
- US-A1- 2008 113 311

## Beschreibung

Die Erfindung geht von einem Bracket mit den im Oberbegriff des Anspruchs 1 angegebenen Merkmalen aus. Ein solches Bracket ist aus der US 5,322,435 A bekannt. Das bekannte Bracket hat zum Verschließen seines Slots einen Schieber, welcher in seitlichen Führungsnuten verschiebbar ist, welche sowohl in der okklusalen Wand als auch in der gingivalen Wand des Brackets vorgesehen sind. Um den Schieber sowohl in seiner Offenstellung als auch in seiner Schließstellung halten zu können, ist in einer der Wände des Brackets eine zum Schieber hin offene Bohrung vorgesehen, in welcher sich entweder eine Wendelfeder, welche gegen die Unterseite des Schiebers drückt, oder ein zylindrischer Bolzen aus einem elastomeren Kunststoff befindet, welcher über die Öffnung der Bohrung vorsteht und gegen die Unterseite des Schiebers drückt. An der Unterseite des Schiebers sind zwei Ausnehmungen vorgesehen. In die eine Ausnehmung greift die Feder bzw. der Bolzen mit seinem aus der Bohrung vorstehenden Ende in der Offenstellung des Schiebers ein. In die andere Ausnehmung greift die Feder bzw. der Bolzen mit seinem aus der Bohrung vorstehenden Ende in der Schließstellung des Schiebers ein. Ein die beiden Ausnehmungen trennender Vorsprung muss die Wendelfeder bzw. den Bolzen überwinden, wenn der Schieber zwischen seiner Offenstellung und seiner Schließstellung verschoben werden soll. Das Überwinden ist schwierig, weil der Schieber rechtwinklig zu der Richtung, in welcher die Feder in die Bohrung zurückgedrängt werden muss, verschoben wird. Außerdem kann es zu einem Verhaken zwischen der Feder und dem Schieber sowie zu einer Beschädigung der Feder kommen. Der elastomere Kunststoffbolzen lässt sich nicht in die Bohrung zurückdrängen, da der Kunststoff als Feststoff nicht kompressibel ist. Stattdessen muss der Schieber gebogen werden, um ihn über den Kunststoffbolzen hinwegzubewegen. Infolge dessen muss der Schieber entsprechend dünn ausgebildet sein, um die Kraft, die beim Verschieben aufgewendet werden muss, in praktikablen Grenzen zu halten. Bei den geringen Abmessungen, die Brackets typisch haben, ist das bekannte Bracket schwierig zu verwirklichen.

Aus der US 5,613,850 ist ein selbstligierendes Bracket bekannt, in welchem der Schieber mit einer U-förmigen Feder kombiniert ist, welche den Schieber umgibt. Einer der beiden Schenkel der Feder ist durch einen Prägevorgang mit einem Vorsprung versehen, so dass er in Schließstellung mit seinem Vorsprung in eine Ausnehmung eines Bracketflügels einrastet. Durch Niederdrücken dieses Schenkels kann die Feder aus ihrer Raststellung herausbewegt und der Schieber aus seiner Schließstellung heraus geschoben werden. In der Offenstellung wird der Schieber nicht gehalten, so dass er verloren gehen kann, was im Mund besonders unangenehm ist, weil der Schieber verschluckt werden könnte.

Aus der EP 1 679 048 A2 ist ein selbstligierendes Bracket bekannt, dessen Schieber durch eine Feder, welche in einem Loch des Bracketkörpers steckt und mittels eines vorstehenden, zweifach abgewinkelten Schenkels in ein durchgehendes Loch des Schiebers eingreift, in seiner Schließstellung gehalten wird. Die Feder kann aus dem Loch herausgedrückt und der Schieber aus dem Bracket entnommen werden. Die Feder ist nicht in der Lage, den Schieber in der Offenstellung zu halten. Ein weiterer Nachteil besteht darin, dass sich in dem Loch des Schiebers und unter dem Schieber Speisereste ansammeln können, die sich weder durch Zähneputzen mit einer Bürste noch durch Mundspülungen beseitigen lassen.

Aus der EP 1 679 048 A2 ist weiterhin ein selbstligierendes Bracket bekannt, dessen Schieber ein Langloch hat, durch welches ein Sicherungsstift hindurch greift, welcher in einer Bohrung im Bracket verankert wird, nachdem der Schieber in das Bracket eingesetzt ist. Der Spielraum, den der Sicherungsstift im Langloch hat, begrenzt den Weg, um welchen der Schieber im Bracket zwischen Schließstellung und Offenstellung verschoben werden kann. Ist der Sicherungsstift einmal eingesetzt, kann der Schieber nicht mehr entfernt werden. Der Sicherungsstift ist nicht in der Lage, den Schieber in der Schließstellung und in der Offenstellung zu halten. Nur durch Reibung kann es zu einer gewissen Hemmung des Schiebers kommen, wodurch der Schieber weder in der Schließstellung noch in der Offenstellung zuverlässig gehalten werden kann.

Die DE 10 2006 053 215 A1 offenbart ein selbstligierendes Bracket mit einem Schieber, welcher mit einer in der gingivalen Wand des Brackets angeordneten Blattfeder zusammenarbeitet, welche beim Verschieben des Schiebers seitlich ausgelenkt werden kann. Dieses Bracket hat den Vorteil, dass die Blattfeder nicht gegen die Unterseite des Schiebers drückt und dass die Blattfeder den Schieber sowohl in seiner geschlossenen Stellung als auch an seiner offenen Stellung am Bracketkörper festhalten kann. Wenn das Bracket und sein Schieber jedoch pulvermetallurgisch aus einer Keramik hergestellt werden, z. B. durch ein CIM-Verfahren (Ceramic Injection Molding = Keramikpulverspritzgießen), dann ist es schwierig, für ein derartiges Bracket die erforderlichen geringen Maßtoleranzen einzuhalten.

Der vorliegenden Erfindung liegt die Aufgabe zugrunde, ein selbstligierendes Bracket für die Orthodontie zu schaffen, bei welchem der Slot des Brackets durch einen Schieber verschlossen werden kann, der selbst keine Federeigenschaften haben muss, mechanisch stabil ausgebildet werden kann, sowohl in Schließstellung als auch in Offenstellung unverlierbar gehalten wird, leicht zu öffnen und zu schließen ist, dem Bracket ein annehmbares Aussehen verleiht und wenig Gelegenheit für das Ansammeln schwierig zu entfernender Speisereste bietet. Außerdem soll sich die Erfindung für die Herstellung keramischer Brackets eignen.

Der Lösung dieser Aufgabe dient ein Bracket mit den im Anspruch 1 angegebenen Merkmalen. Vorteilhafte Weiterbildungen der Erfindung sind Gegenstand der Unteransprüche.

Bei dem erfindungsgemäßen Bracket sind die Mittel, die den Schieber sowohl in seiner Schließstellung als auch in seiner Offenstellung halten können, eine längliche Ausnehmung, welche in der gingivalen Wand und/oder in der okklusalen Wand des Brackets vorgesehen ist und eine dem Schieber zugewandte Öffnung hat, aus welcher ein in der Ausnehmung liegender und in der Ausnehmung unterstützter Strang mit einem Abschnitt seiner Mantelfläche nach außen vorsteht. Der Strang ist elastisch oder elastomer unterstützt. Dadurch kann der Strang ausweichen, z. B. nachgeben, wenn der Schieber beim Verschieben mit einem an seiner Unterseite vorgesehenen Vorsprung oder Anschlag auf den aus der Öffnung der Ausnehmung vorstehenden Abschnitt des Strangs trifft. Unter der Unterseite des Schiebers wird die der Basis des Brackets zugewandte Seite des Schiebers verstanden. Ein am Schieber vorgesehener erster Anschlag schlägt in der Offenstellung des Schiebers an dem Strang an, wodurch der Schieber daran gehindert wird, völlig aus seiner Führung herauszugleiten; vielmehr bleibt der Schieber in seiner Offenstellung mit dem Bracket unverlierbar verbunden.

Der an der Unterseite des Schiebers vorgesehene Vorsprung ist so angeordnet, dass er beim Verschieben des Schiebers in seine Schließstellung vor dem Erreichen seiner Schließstellung an dem Strang anschlägt. Bei weiterem Verschieben des Schiebers bis in seine Schließstellung kann dieser Vorsprung den aus der Ausnehmung hervorstehenden Abschnitt des Stranges überwinden, indem der Strang dem Vorsprung gegen eine elastische oder elastomere Rückstellkraft ausweicht. Entsprechendes geschieht beim Verschieben des Schiebers in seine Offenstellung. Durch das Ausweichen des Stranges verringert sich das Maß, um welches er aus der Ausnehmung vorsteht. Dadurch wird es ermöglicht, dass der Vorsprung an der Unterseite des Schiebers den Strang zwar mit Widerstand überwindet, jedoch ohne dass der Schieber auf Biegung beansprucht wird.

Wenn der Schieber beim Verschieben in seine Schließstellung mit seinem Vorsprung den Strang überwunden hat, soll dieser wieder in ihre ursprüngliche Lage oder Gestalt zurückfedern. Damit das möglich ist, ist zu beiden Seiten des Vorsprungs, d. h. bezogen auf die Verschieberichtung des Schiebers sowohl auf der Vorderseite als auch auf der Rückseite des Vorsprungs, genügend Raum vorhanden, um den aus der Ausnehmung vorstehende Abschnitt des Stranges aufzunehmen, vorzugsweise so, dass in dem aufgenommenen Abschnitt des Stranges keine Rückstellkraft mehr vorhanden ist bzw. auf den Strang keine Rückstellkraft mehr einwirkt. Der Raum, in welchem der vorstehende Abschnitt des Stranges liegt, wenn sich der Schieber in seiner Schließstellung befindet, muss nicht größer oder nicht wesentlich größer sein als der vorstehende Abschnitt des Stranges, so dass dieser die Lage des Schiebers in seiner Schließstellung spielfrei oder mit wenig Spiel sichert. Der Raum, in welchem sich der vorstehende Abschnitt des Stranges befindet, wenn sich der Schieber in seiner Schließstellung befindet, kann aber auch größer sein als die Erstreckung des Stranges in Bewegungsrichtung des Schiebers, wenn dieser in seiner Schließstellung an einem zweiten Anschlag anschlägt, welcher am Bracketkörper vorgesehen ist.

Die Erfindung hat wesentliche Vorteile:
- Ein Strang, welcher durch seine Bauart und durch seinen liegenden Einbau vom Schieber bei seiner Verschiebebewegung verdrängt werden kann, macht es möglich, den Strang nur durch Aufbringen einer definierten Kraft zu überwinden, welche von der entstehenden Rückstellkraft des Stranges bestimmt wird, welche auf den Strang wirkt.
- Beim Überführen des Schiebers von der Offenstellung in die Schließstellung muss nur dann eine Federkraft oder eine elastomere Rückstellkraft überwunden werden, wenn der an der Unterseite des Schiebers vorgesehene Vorsprung auf den Strang trifft und ihn dann durch Verdrängen überwindet. Solange es nicht zu einem Verdrängen des Stranges kommt, muss keine Rückstellkraft überwunden werden, weil sich der Strang nicht mit Druck an die Unterseite des Schiebers anlegen muss. Der Strang darf aber der Unterseite des Schiebers anliegen. Die dabei auf den Schieber ausgeübte Kraft ist vorzugsweise gering; sie ist jedenfalls wesentlich geringer als die beim Überwinden des Vorsprungs aufzubringende Kraft.
- Das Verschieben des Schiebers kann, bis der Vorsprung des Schiebers auf den Strang trifft, leichtgängig und ohne besondere Kraft erfolgen. Erst kurz vor Erreichen der Schließstellung steigt der Kraftbedarf an und es kommt zu einem spürbaren Rastvorgang, der anzeigt, dass der Schieber in seiner Schließstellung gesichert ist.
- Beim erstmaligen Einsetzen des Schiebers in seine Führung kann der Strang durch Verdrängen überwunden werden und der Schieber gelangt zunächst in seine Offenstellung, in welcher er durch den ersten Anschlag, welcher an der Unterseite des Schiebers vorgesehen ist und den Strang beim erstmaligen Einführen des Schiebers in seine Führung überwindet, gegen ein Wiederherausgleiten aus der Führung gesichert wird.
- Der Schieber kann, da er beim Verschieben zwischen der Offenstellung und der Schließstellung nicht auf Biegung beansprucht werden muss, biegesteif ausgeführt werden. Das begünstigt eine Herstellung des Brackets und seines Schiebers aus Keramik und ist günstig, um Kräfte aufzunehmen, die von einem im Slot des Brackets liegenden Drahtbogen auf die Unterseite des Schiebers ausgeübt werden.
- Eine schwer zu reinigende Durchgriffsöffnung ist weder im Bracket noch in seinem Schieber erforderlich.
- Zum Betätigen des Schiebers kann z. B. eine Vertiefung in der Oberseite des Schiebers vorgesehen sein, welche leicht zu reinigen ist. In die Vertiefung kann der behandelnde Kieferorthopäde zum Verschieben des Schiebers mit einem Werkzeug eingreifen. Im übrigen kann die Oberseite des Schiebers glatt ausgebildet sein und mit der Oberseite der angrenzenden Ligaturenflügel fluchten, was nicht nur für das Reinigen günstig ist, sondern dem Bracket auch ein ansprechendes äußeres Erscheinungsbild vermittelt, ohne die technische Funktion des Brackets zu beeinträchtigen.
- Die Erfindung eignet sich für Brackets, die aus irgendeinem der für Brackets bekannten Materialien bestehen können, nämlich für Brackets und Schieber aus Metall, aus Keramik und/oder aus Kunststoff, wobei Keramik bevorzugt ist.

Der Strang kann hohl ausgebildet sein; er ist vorzugsweise aber nicht hohl, um Ablagerungen wie z. B. Plaque zu vermeiden, die nicht entfernt werden können.

Der Strang ist unnachgiebig ausgebildet und wird mit seiner dem Schieber abgewandten Seite in der Ausnehmung von einem elastisch oder elastomer nachgebendem Widerlager abgestützt. Das hat wesentliche Vorteile:
- Es kann ein längerer Federweg als im umgekehrten Fall, d. h. bei einem unnachgiebig unterstützten elastischen oder elastomeren Strang, verwirklicht werden.
- Beim Verschieben des Schiebers tritt weniger Reibung auf als im umgekehrten Fall.
- Beim Verschieben des Schiebers gibt es weniger Abrieb als im umgekehrten Fall.
- Das Einrasten des Schiebers in die Schließstellung ist besser hörbar als im umgekehrten Fall.

Ob ein Strang oder sein ihn stützendes Widerlager im Sinne der Erfindung elastisch oder elastomer nachgebend oder unnachgiebig ausgebildet sind, ist im Hinblick auf die Größe der beim Verschieben des Schiebers des selbstligierenden orthodontischen Brackets typisch auftretenden Kräfte zu entscheiden.

In jedem Fall ist der Strang vorzugsweise geradlinig ausgebildet, insbesondere zylindrisch.

Vorzugsweise ragt der Strang höchstens mit seinem halben Umfang aus der Öffnung der Ausnehmung im Bracketkörper heraus. Dadurch kann sichergestellt werden, dass der Strang beim Verschieben des Schiebers nicht aus der Ausnehmung herausgezogen wird. Ist der Strang zylindrisch, dann verjüngt sich der über die Öffnung der Ausnehmung vorstehende Umfangsabschnitt des Stranges mit zunehmender Entfernung von der Öffnung der Ausnehmung und erleichtert es, den an der Unterseite des Schiebers vorgesehenen Vorsprung über den Strang hinwegzubewegen. Zu einer solchen Erleichterung trägt es darüber hinaus bei, dass der Strang die beiden Längswände der Ausnehmung nicht schon am Rand der Öffnung der Ausnehmung berührt, sondern erst in einem Abstand vom Rand der Ausnehmung, wenn - wie es bevorzugt ist - der Strang mit weniger als der Hälfte seines Umfangs über den Rand der Öffnung der Ausnehmung herausragt. Das erleichtert das Verdrängen des Strangs, wenn der Schieber mit seinem an der Unterseite des Schiebers vorgesehenen Vorsprung auf den Strang trifft. Diesen Vorteil erreicht man nicht nur mit einem zylindrischen Strang, sondern auch mit einem Strang, welcher mit einem keilförmigen Abschnitt über den Rand der Öffnung der Ausnehmung hinausragt, insbesondere dann, wenn sich der keilförmige Abschnitt noch ein kleines Stück weit in die Ausnehmung hinein erstreckt. Der an den keilförmigen Abschnitt anschließende, vollständig in der Ausnehmung liegende Abschnitt liegt den beiden Seitenwänden der Ausnehmung und dem Boden der Ausnehmung vorzugsweise vollflächig an. Der Boden der Ausnehmung bildet für den Strang ein Widerlager, welches den Strang unterstützt und nachgeben kann.

Der Strang hat in der Ausnehmung, in welcher er liegt, vorzugsweise kein seitliches Spiel, um ihm einen guten Halt zu bieten und die Ablagerung von Plaque in der Ausnehmung soweit wie möglich zu verhindern. Die Forderung, dass der Strang in seiner Ausnehmung vorzugsweise kein seitliches Spiel haben soll, bedeutet aber nicht, dass er sich mit seinem verjüngenden Abschnitt nicht von den Seitenwänden der Ausnehmung entfernen darf.

Die Länge der Ausnehmung, in welcher der Strang liegt, ist vorzugsweise kleiner als die Breite der Schieber, damit der Schieber die Ausnehmung und den darin liegenden Strang vollständig überdecken kann. Das schützt die Ausnehmung davor, dass sich in ihr Ablagerungen ansammeln. Die Länge des Stranges und seiner Ausnehmung stimmen vorzugsweise überein.

Vorzugsweise steckt der Strang in der ersten Wand des Brackets. Unter der ersten Wand des Brackets wird jene Wand verstanden, an welcher der Schieber in seine Führung eingeführt wird. Der zweite Anschlag, an welchem der Schieber in seiner Schließstellung anschlägt, ist vorzugsweise an der gegenüberliegenden zweiten Wand des Brackets ausgebildet und vorzugsweise so angeordnet, dass der Schieber mit seinem vorderen Ende am zweiten Anschlag anschlägt. Unter dem vorderen Ende des Schiebers wird jenes Ende verstanden, welches beim Schieben des Schiebers in seine Schließstellung vorne liegt.

Vorzugsweise ist der Strang in der gingivalen Wand des Brackets vorgesehen, wohingegen der zweite Anschlag an der okklusalen Wand vorgesehen ist, so dass der Schieber, wenn das Bracket auf einen Zahn geklebt ist, von der Gingiva herkommend von seiner Offenstellung in seine Schließstellung überführt wird. Der Strang kann aber auch in der okklusalen Wand vorgesehen sein, wohingegen der zweite Anschlag in diesem Fall an der gingivalen Wand vorgesehen ist, so dass der Schieber von okklusal herkommend in Richtung gingival in seine Schließstellung überführt wird. Diese Variante bietet eine besonders hohe Sicherheit gegen ein Aufdrücken des Schiebers beim Beißen.

Das erfindungsgemäße Bracket kommt mit einem einzigen Strang in der gingivalen oder okklusalen Wand des Brackets aus, welcher vorzugsweise mittig in Bezug auf die Länge des Brackets angeordnet ist. Die Länge des Brackets wird in Längsrichtung des Slots gemessen.

Ein Bracket, in welchem sowohl in der gingivalen Wand als auch in der okklusalen Wand des Brackets ein Strang angeordnet ist, ist aufwendiger, aber auch möglich. In diesem Fall dient ein Strang, vorzugsweise der Strang in der gingivalen Wand, dazu, den Schieber gegen Verlieren zu sichern, wenn er sich in der Offenstellung befindet, wohingegen der andere Strang, vorzugsweise der Strang in der okklusalen Wand, dazu dient, den Schieber in seiner Schließstellung zu sichern. Beide Stränge liegen jeweils in einer Ausnehmung, welche sich parallel zur Nut erstreckt, welche der Schieber in seiner Schließstellung überbrückt.

Bei der Ausführungsform des Brackets mit zwei Strängen, auf jeder Seite der Nut je ein Strang, muss an der Unterseite des Schiebers lediglich ein einziger Anschlag ausgebildet sein, an welchem der zweite Strang in der Schließstellung des Schiebers anschlagen kann. Von diesem Anschlag aus benötigt man für den Verschiebebereich des Schiebers zwischen seiner Schließstellung und seiner Offenstellung eine flache, vorzugsweise quaderförmige Ausnehmung, in welche die vorstehenden Umfangsabschnitte der beiden Stränge eingreifen können und die sich in der Verschieberichtung mindestens über eine solche Länge erstreckt, dass in Schließstellung des Schiebers beide Stränge in eine flache Ausnehmung an der Unterseite des Schiebers eingreifen können. Die in der Verschieberichtung gemessene Länge der flachen Ausnehmung an der Unterseite des Schiebers ist daher mindestens gleich dem Abstand der beiden Stränge, gemessen über die einander abgewandten Seiten ihrer vorstehenden Enden.

Ein dazwischen liegender Vorsprung kann bei dieser Variante der Erfindung an der Unterseite des Schiebers entfallen.

Bevorzugt ist die Ausbildung des Brackets so, dass in der gingivalen Wand und/oder in der okklusalen Wand nur ein einziger Strang vorgesehen ist, welcher vorzugsweise zylindrisch ausgebildet ist.

Die Öffnung der den Strang aufnehmenden Ausnehmung weist von der Basis des Brackets fort und die Ausnehmung ist zweckmäßigerweise so orientiert, dass sie sich senkrecht oder annähernd senkrecht zum Schieber in die gingivale Wand bzw. in die okklusale Wand des Brackets hinein erstreckt.

Der Schieber ist vorzugsweise ein hauptsächlich ebenes Gebilde, welches in geradlinigen Führungen aufgenommen ist. Es ist aber auch möglich, Führungen vorzusehen, die kreisbogenförmig verlaufen, und in solche Führungen einen entsprechend gekrümmten Schieber einzuführen.

Der Strang kann in der ihn aufnehmenden Ausnehmung fixiert sein, z. B. durch Kleben. Der Strang kann aber auch einfach in seine jeweilige Ausnehmung hineingelegt sein, ohne ihn durch Klebstoff zu fixieren, da er mindestens in der Schließstellung, vorzugsweise auch in der Offenstellung des Schiebers, durch diesen gesichert ist.

Das Bracket und sein Schieber bestehen vorzugsweise aus einer Keramik, das Bracket vorzugsweise aus Aluminiumoxid, der Schieber vorzugsweise aus einer Keramik mit höherer Festigkeit als Aluminiumoxid, insbesondere aus Zirkonoxid. Das ist besonders vorteilhaft in Kombination mit einem Strang aus POM, PEK oder PEEK weil diese wegen ihrer hellen Farbe den ästhetischen Gesamteindruck eines keramischen Brackets nicht stören, im Gegensatz zu einer metallischen Feder oder zu einem dunklen Strang, welche durch einen dünnen keramischen Schieber störend hindurch scheinen würden. Durch die Keramik kann jedoch die Zahnfarbe durchscheinen. Außerdem ermöglicht die Erfindung mit dem Einsatz eines Kunststoffstranges einen Ausgleich von Fertigungstoleranzen des Brackets und seines Schiebers.

Bei Einsatz eines unnachgiebigen Stranges besteht dieser vorzugsweise aus einer Keramik, insbesondere aus derselben Keramik wie der Schieber. Ein keramischer Strang verhält sich im Erscheinungsbild des Brackets besonders unauffällig und kann das aus anderem Material bestehende Widerlager verdecken.

Zu einem Toleranzausgleich kommt man in Weiterbildung der Erfindung besonders elegant , wenn man die Ausnehmung durch einen Schlitz bildet, welcher sich von der dem Schieber zugewandten Öffnung durchgehend bis zur Unterseite der Basis des Brackets erstreckt und wenn man in den Schlitz einen Stopfen steckt, an welchem sich der Strang abstützt. Nach dem Einlegen des Stranges in seine Ausnehmung und dem Einsetzen des Schiebers in seine Führung und dem Vorschieben des Schiebers in seine Schließstellung kann man den Stopfen in Richtung auf den Schieber vorschieben, bis der zwischen dem Stopfen und dem Schieber angeordnete Strang die Unterseite des Schiebers berührt, wodurch die Vorschubbewegung des Stopfen endet. Diese Vorschubbewegung des Stopfens kann mit so geringer Kraft ausgeführt werden, dass der nachgebend ausgebildete Stopfen, wenn der Strang zur Anlage an der Unterseite des Schiebers gelangt, allenfalls unwesentlich gestaucht wird. Eine bleibende Stauchung kann z. B. dadurch vermieden werden, dass man den Strang und den Stopfen zunächst dem freien Spiel der Kräfte überlässt, nachdem die Vorschubbewegung des Stopfens zum Ende gekommen ist, so dass sich eine eventuelle Stauchung des Stopfens durch dessen Rückstellvermögen wieder rückbilden kann. Danach kann man die Lage des Stopfens in dem Schlitz fixieren, z. B. dadurch, dass man den Freiraum zwischen jenem Ende des Stopfens, welcher dem Schieber abgewandt ist, und der Unterseite der Basis des Brackets mit einem aushärtenden Klebstoff füllt. Dabei kann es sich z. B. um einen Klebstoff der Art handeln, wie er für das Aufkleben von Brackets auf Zähne üblicherweise verwendet wird.

Auf diese Weise kann sichergestellt werden, dass unabhängig von Maßtoleranzen, die einen Einfluss auf das Zusammenwirken zwischen dem Bracket und seinem Schieber haben, der Strang, der mit dem Schieber zusammenarbeitet, in dieser Funktion, nämlich mit dem Schieber zusammen zu arbeiten, von den Maßtoleranzen im Wesentlichen unbeeinflusst ist.

Der Stopfen nimmt vorzugsweise den gesamten Querschnitt des Schlitzes ein, um möglichst keinen Freiraum für Ablagerungen zu bieten. Der Stopfen besteht vorzugsweise aus einem elastomeren Kunststoff.

Der Stopfen, welcher den Strang abstützt, hat vorzugsweise Rillen, welche in Richtung von der Basis des Brackets zum Schieber verlaufen, d. h. in Richtung lingual-labial. In diese Rillen kann ein Klebstoff eindringen, mit welchem der Stopfen in der Ausnehmung des Bracketkörpers fixiert wird. Dadurch wird die Verankerung des Stopfens verbessert.

Vorzugsweise ist der Stopfen in der Weise abgestuft ausgebildet, dass er in unmittelbarer Nachbarschaft des Stranges den Querschnitt der Ausnehmung nur teilweise ausfüllt und dadurch einen Raum schafft, in den hinein der Strang durch elastische oder - bevorzugt - durch elastomere Verformung verdrängt werden kann.

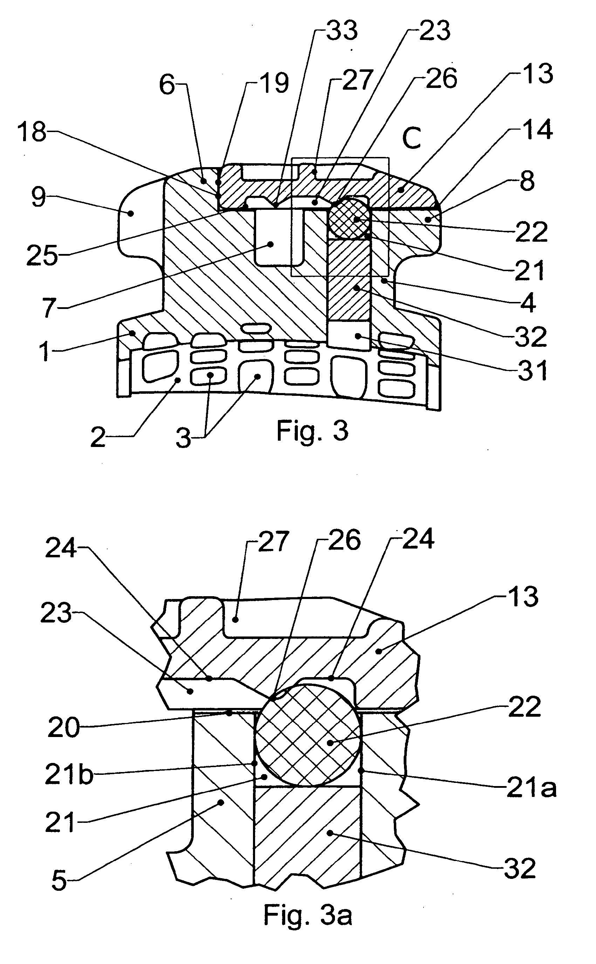

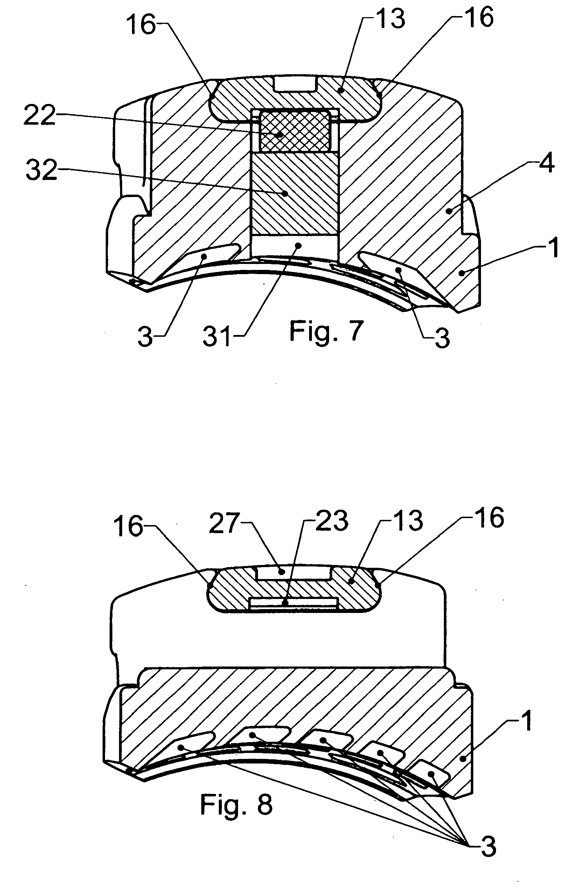

Weitere Merkmale und Vorzüge der Erfindung werden nachstehend anhand von Ausführungsbeispielen beschrieben, die in den beigefügten Zeichnungen dargestellt sind. Gleiche und einander entsprechende Teile sind in den Ausführungsbeispielen mit übereinstimmenden Bezugszahlen bezeichnet.
- Figur 1: zeigt ein erstes Bracket in einer Ansicht auf die gingivale Seite eines Brackets mit einem Schieber in Offenstellung,
- Figur 2: zeigt die Seitenansicht II des Brackets,
- Figur 3: zeigt den Schnitt A-A des geschlossenen Brackets,
- Figur 3a: zeigt vergrößert ein Detail "J" aus Figur 3,
- Figur 4: zeigt einen Schnitt wie in Figur 3, jedoch mit dem Schieber in seiner Offenstellung,
- Figur 4a: zeigt vergrößert ein Detail "L" aus Figur 4,
- Figur 5: zeigt das Bracket in Draufsicht,
- Figur 6: zeigt das Bracket in einer Ansicht von unten,
- Figur 7: zeigt den Schnitt C-C des Brackets,
- Figur 8: zeigt den Schnitt D-D des Brackets,
- Figur 9: zeigt eine isometrische Ansicht des Brackets in seiner geschlossenen Stellung,
- Figur 10: zeigt das in Figur 9 gezeigte Bracket mit dem Schieber in seiner Offenstellung,
- Figur 11: zeigt eine isometrische Ansicht eines zweiten Brackets, dessen Schieber eine rautenförmige Vertiefung aufweist und in seiner geschlossenen Stellung ist,
- Figur 12: zeigt das in Figur 11 gezeigte Bracket mit dem Schieber in seiner Offenstellung,
- Figur 13: zeigt ein drittes Bracket in einem Schnitt entsprechend der Figur 3, gemäß der Schnittebene A-A in Figur 15, mit einem Schieber in geschlossener Stellung,
- Figur 14: zeigt einen Schnitt durch das dritte Bracket wie in Figur 13, jedoch mit dem Schieber in geöffneter Stellung,
- Figur 15: zeigt das dritte Bracket in einer Draufsicht auf seine labiale Seite,
- Figur 16: zeigt das dritte Bracket in einer Draufsicht auf seine linguale Seite,
- Figur 17: zeigt das Detail C aus Figur 16 in vergrößertem Maßstab,
- Figur 18: zeigt das dritte Bracket in einer Schrägansicht mit dem Schieber in seiner Offenstellung,
- Figur 19: zeigt das dritte Bracket in einer Schrägansicht mit dem Schieber in seiner geschlossenen Stellung,
- Figur 20: zeigt als Detail den im dritten Bracket vorgesehenen Stopfen in vergrößertem Maßstab in einer Draufsicht auf eine seiner beiden Breitseiten,
- Figur 21: zeigt den Stopfen aus Figur 20 in einer Draufsicht auf eine seiner beiden Schmalseiten,
- Figur 22: zeigt den Stopfen aus Figur 20 in einer Draufsicht auf seine labiale Seite,
- Figur 23: zeigt den Stopfen aus Figur 20 in einer Draufsicht auf seine linguale Seite, und die
- Figuren 24 und 25: zeigen den Stopfen aus Figur 20 in zwei unterschiedlichen Schrägansichten.
Das in den Figuren dargestellte Bracket hat eine gewölbte Basis 1, deren Wölbung der Vorderseite eines Zahnes angenähert ist. Die Basis 1 hat an ihrer Unterseite 2, welche die linguale Seite des Brackets bildet, in Reihe angeordnete Vertiefungen 3, welche hinterschnitten ausgebildet sind. Im Schnitt, wie er in Figur 3 dargestellt ist, haben die Vertiefungen 3 eine rechteckige Kontur. In einem dazu senkrecht gelegten Schnitt haben die Vertiefungen 3, wie in Figur 7 oder Figur 8 dargestellt, eine rautenförmige Kontur. Auf die Unterseite 2 kann ein Klebstoff aufgetragen werden, um das Bracket auf einen Zahn zu kleben. Durch die Verzahnung der hinterschnittenen Vertiefungen 3 mit dem Klebstoff wird eine gute Haftfestigkeit erzielt. In einer jeden Reihe sind die Vertiefungen 3 und mit ihnen die Hinterschnitte übereinstimmend orientiert. Von Reihe zu Reihe sind sie jedoch abwechselnd mal in die eine und mal in die andere Richtung orientiert. Dadurch wird bei einem auf das Bracket wirkenden Schub in Richtung von mesial nach distal dieselbe Haftfestigkeit erzielt wie bei einem Schub von distal nach mesial und bei einem Schub in Richtung okklusal-gingival oder gingival-okklusal ist die Haftfestigkeit unabhängig von der Schubrichtung hoch.

Die Basis 1 geht in einen Sockel 4 über, auf welchem eine gingivale Wand 5 und eine okklusale Wand 6 stehen. Die beiden Wänden 5 und 6 verlaufen parallel zueinander und sind durch eine Nut 7 getrennt, welche geradlinig durchgehend von distal nach mesial verläuft und nach labial offen ist.

An der gingivalen Wand 5 ist ein in Richtung gingival ragender Ligaturenflügel 8 vorgesehen. An der okklusalen Wand 6 ist ein in Richtung okklusal ragender Ligaturenflügel 9 vorgesehen. An ihnen können in einer dem Fachma'nn bekannten Weise Ligaturendrähte angebracht werden. Die Ligaturenflügel 8 und 9 können alternativ in jeweils ein Paar Ligaturenflügel unterteilt sein.

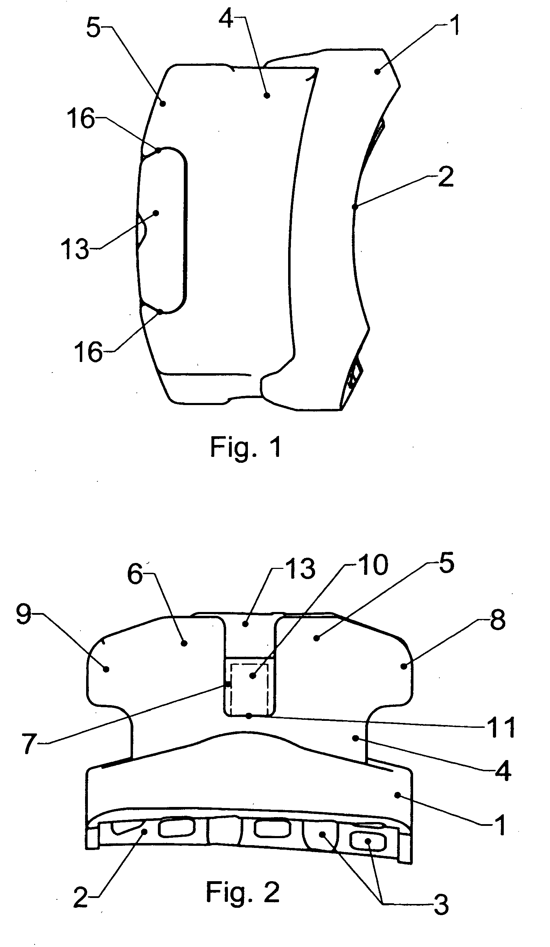

Die Nut 7, welche auch als Slot bezeichnet wird, dient zur Aufnahme eines Drahtbogens 10, welcher insbesondere einen rechteckigen Querschnitt hat, nicht Bestandteil des Brackets ist und deshalb in Figur 2 lediglich gestrichelt mit seinem Umriss dargestellt ist. Durch Spannen des Drahtbogens 10 kann auf den Grund 11 der Nut 7 Druck und auf die Wände 5 und 6 des Brackets ein Drehmoment ausgeübt werden. Zu diesem Zweck ist der lichte Querschnitt der Nut 7 im wesentlichen rechteckig ausgebildet. Er wird im vorliegenden Fall durch den Grund 11 der Nut 7 sowie durch die gingivale Wand 5 und durch die okklusale Wand 6 begrenzt. An den Enden der Nut 7 sind deren Kanten 12 gerundet. Außerdem sind mindestens die die Nut 7 nach oben begrenzenden Kanten eines Schiebers 13 gerundet. Das dient der Reibungsminderung für den in der Nut 7 liegenden Drahtbogen 10 und ist besonders bei starken Fehlstellungen der Zähne von Vorteil, welche einen besonders unregelmäßigen Verlauf des Drahtbogens 10 erfordern.

Eine labiale Ausnehmung 14 in der gingivalen Wand 5 und eine labiale Ausnehmung 15 in der okklusalen Wand 6 nehmen den hauptsächlich eben ausgebildeten Schieber 13 mit rechteckigem Grundriss auf. Die Ausnehmungen 14 und 15 haben zueinander parallele und zum Grund 11 der Nut 7 parallele Hinterschnitte 16, welche zusammen mit dem Grund 17 der Ausnehmung 15 und dem Grund 20 der Ausnehmung 14 eine Gleitführung für den Schieber 13 bilden, welche der Schieber 13 in labialer Richtung nicht verlassen kann, weil die Hinterschnitte 16 das verhindern. Die Ausnehmungen 14 und 15 liegen in einer gemeinsamen Flucht. Die Ausnehmung 14 durchquert die gingivale Wand 5, während die Ausnehmung 15 in der okklusalen Wand 6 an einem Anschlag 18 endet, bei welchem es sich um den in den Patentansprüchen genannten "zweiten" Anschlag handelt.

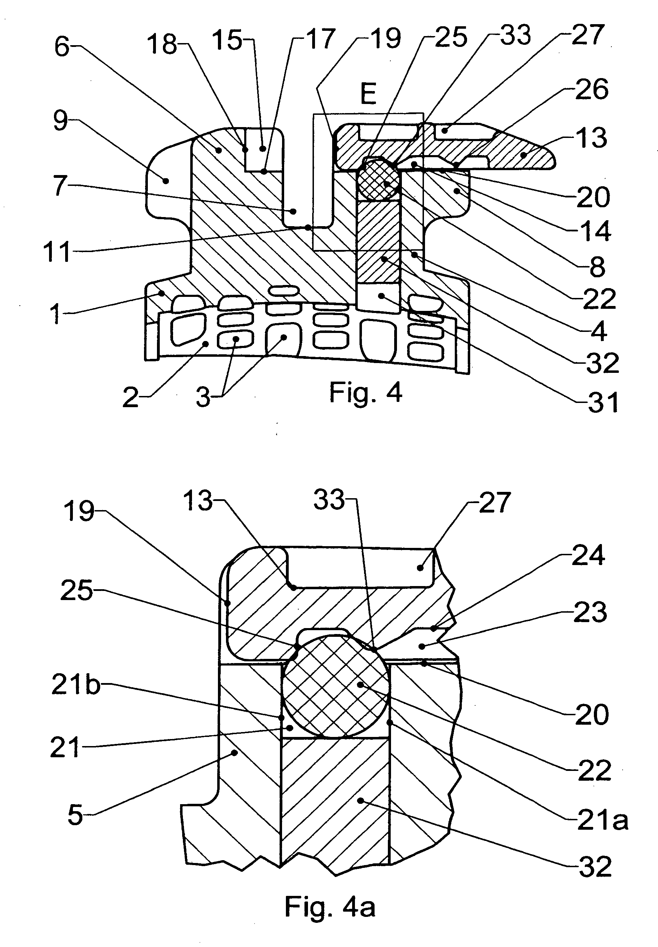

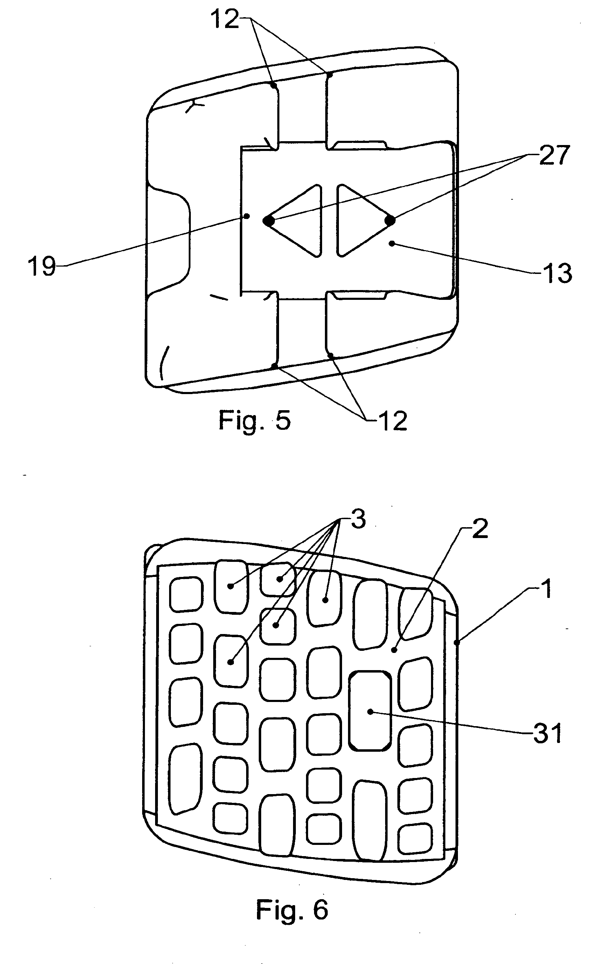

Der Schieber 13 kann in der Führung 15 bis 17 in Richtung gingival-okklusal verschoben werden zwischen einer Offenstellung, die in der Figur 4 dargestellt ist, und einer Schließstellung, die in den Figuren 2, 3 und 5 dargestellt ist. In der Offenstellung ist die Nut 7 von labial her in voller Breite offen. Das vordere Ende 19 des Schiebers 13 schließt vorzugsweise mit der die Nut 7 begrenzenden Oberfläche der gingivalen Wand 5 ab, wie in den Figuren 2, und 7 dargestellt. In der Schließstellung schlägt das vordere Ende 19 des Schiebers 13 am zweiten Anschlag 18 an der okklusalen Wand 6 an, wie es besonders deutlich in Figur 3 dargestellt ist. In der Schließstellung überbrückt der Schieber 13 die Nut 7, so dass ein darin verlaufender Drahtbogen 10 die Nut 7 in labialer Richtung nicht verlassen kann.

In der gingivalen Wand 5 befindet sich eine schlitzförmige Ausnehmung 21, welche sich hauptsächlich parallel zu der die Nut 7 begrenzenden Oberfläche der Wand 5 erstreckt. Die sich in Richtung der Nut 7 erstreckenden, einander gegenüberliegenden Oberflächen 21 a und 21 b verlaufen parallel zueinander, so dass die schlitzförmige Ausnehmung 21 eine quaderförmige Gestalt hat.

Die schlitzförmige Ausnehmung 21 ist ein Abschnitt des im Querschnitt rechteckigen Schlitzes 31, welcher von der labialen Oberseite des Bracketkörpers unter dem Schieber 13 bis zur Unterseite 2 der Basis 1 durchgeht. In diesem Schlitz 31 steckt ein Stopfen 32, welcher einen zylindrischen Strang 22 unterstützt. Die Lage des Stopfens 32 ist so gewählt, dass der vom Stopfen 32 unterstützte Strang 22 in der Schließstellung des Schiebers 13 der Unterseite des Schiebers 13 anliegt, vorzugsweise ohne einen nennenswerten Druck auf die Unterseite des Schiebers auszuüben. In dieser Lage ist der Stopfen 32 fixiert, vorzugsweise durch Klebstoff.

Mit weniger als der Hälfte seines Umfangs ragt der Strang 22 über den labialen Rand der Ausnehmung 21 hinaus und greift in eine Ausnehmung 23 ein, welche an der Unterseite des Schiebers 13 vorgesehen ist. Die Ausnehmung 23 ist im Grundriss rechteckig. Durch sie wird ein Anschlag 25 gebildet, welcher der über den labialen Rand der Ausnehmung 21 hinausragenden Mantelfläche des Stranges 22 anliegt, wenn sich der Schieber 13 in seiner Offenstellung befindet, siehe Figuren 3 und 3a. Bei dem Anschlag 25 handelt es sich um den in den Patentansprüchen angegebenen "ersten" Anschlag. Durch ihn wird verhindert, dass der Schieber 13 unbeabsichtigt vom Bracket heruntergleiten kann, wenn er sich in seiner Offenstellung befindet.

Um einen in der Nut 7 liegenden Drahtbogen 10 zu sichern, wird der Schieber 13 in seine in der Figur 3 dargestellte Schließstellung überführt, in welcher das vordere Ende 19 des Schiebers 13 am Anschlag 18 an der okklusalen Wand 6 anschlägt. Um den Schieber 13 in seiner Schließstellung halten zu können, ist in der Ausnehmung 23 an der Unterseite des Schiebers 13 ein Vorsprung 26 vorgesehen, der bei dem dargestellten Ausführungsbeispiel keilförmig ausgebildet ist, mit einem Winkel von mehr als 90° zwischen seinen beiden Keilflächen, aber beispielsweise auch im Querschnitt die Form eines Kreissegments haben kann. Der Vorsprung 26 erstreckt sich parallel zur Nut 7 und zum Strang 22. Seine Höhe über dem Grund 24 der Ausnehmung 23 ist kleiner als die Tiefe der Ausnehmung 23.

Der Vorsprung 26 ist so angeordnet, dass er in der Schließstellung des Schiebers 13 auf der der Nut 7 zugewandten Seite des Strangs 22 liegt und Kontakt zum Strang 22 hat, siehe Figur 3a. Vorzugsweise ist die Lage des Vorsprungs 26 so gewählt, dass der Strang 22 in der Schließstellung des Schiebers 13 seine Rückstellkraft im Wesentlichen abgebaut hat, so dass der Strang 22 im wesentlichen kräftefrei ist. Der Vorsprung 26 kann beim Überführen des Schiebers 13 in seine Schließstellung den über den labialen Rand der Ausnehmung 21 hinausragenden Abschnitt des Stranges 22 überwinden. Sobald der Scheitel des Vorsprungs 26 den Strang 22 überwunden hat, wird dieser durch seine Rückstellkraft, die sich zuvor aufgebaut hatte, zurückgestellt in seine im Wesentlichen zylindrische Gestalt. Zum Überführen des Schiebers 13 in seine Offenstellung muss ein größerer Widerstand überwunden werden als beim Schließen, da der Strang 22 in diesem Fall von einer steileren Keilfläche des Vorsprungs 26 überwunden werden muss als beim Schließen des Brackets. Der Widerstand, der beim Öffnen des Brackets zu überwinden ist, genügt, um den Schieber 13 bei den im Mund typischerweise auftretenden Kräfte in seiner Schließstellung zu halten. Um die Kraft zum Öffnen des Brackets aufbringen zu können, ist in der Oberseite des Schiebers 13 mindestens eine Vertiefung 27 vorgesehen, in welche man mit einem Werkzeug, z. B. mit einem Skaler, eingreifen kann, um den Schieber 13 zu verschieben.

Ein zweiter Vorsprung 33 ist an der Unterseite des Schiebers 13 in dessen Ausnehmung 23 vorgesehen, um den Schieber 13 in seiner Offenstellung zu halten. Die Wirkungsweise des Vorsprungs 33 entspricht der des Vorsprungs 26. Der Vorsprung 26 ist vorzugsweise höher als der Vorsprung 33, weil es wichtiger ist, die Schließstellung zu sichern als die Offenstellung zu sichern. Der Vorsprung 33 wird nicht unbedingt benötigt, da der Schieber unter Umständen auch durch sonstige Reibungskräfte in der Offenstellung gehalten werden kann.

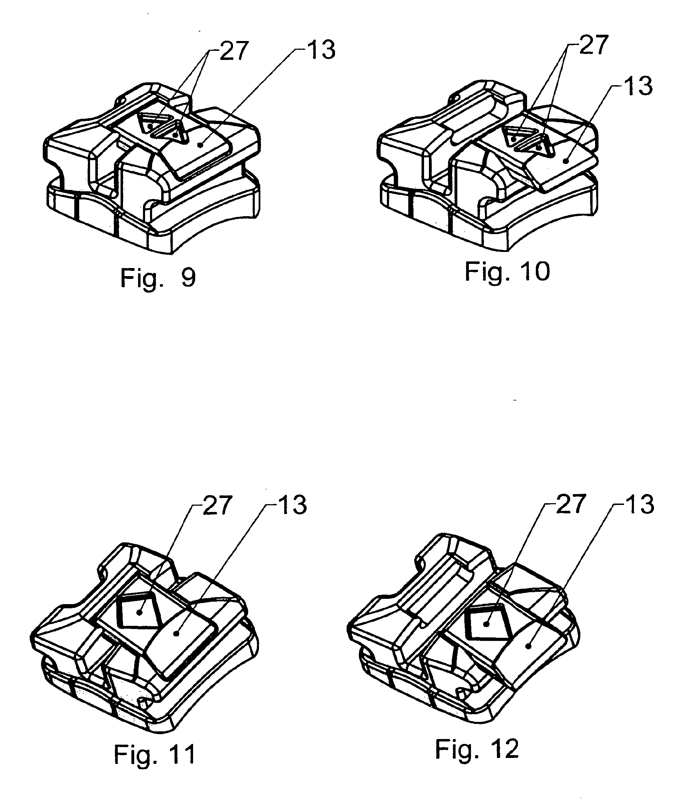

In den Figuren 9 und 10 ist das Bracket in isometrischen Ansichten dargestellt, in denen deutlich zu erkennen, dass sich die Vertiefungen 27 in Verschieberichtung verjüngen, nämlich dreieckig geformt sind. In diese Vertiefungen 27 kann zum Öffnen oder Schließen des Schiebers 13 mit einem Werkzeug eingegriffen werden. Da sich die Vertiefungen 27 jeweils in der für ein Öffnen bzw. Schließen vorzunehmenden Verschieberichtung verjüngen, lässt sich der Schieber 13 auf diese Weise leichter betätigen.

Die beiden Vertiefungen 27 können zu einer einzigen Vertiefung 27 zusammengefasst werden, wie dies in den Figuren 11 und 12 dargestellt ist. Die Vertiefung 27 des in den Figuren 11 und 12 dargestellten Ausführungsbeispiels verjüngt sich ebenfalls in Längsrichtung des Schiebers 13 zu ihren Enden hin, läuft also in der jeweiligen Verschieberichtung spitz zu und erleichtert so das Betätigen des Schiebers 13 mit einem geeigneten Werkzeug.

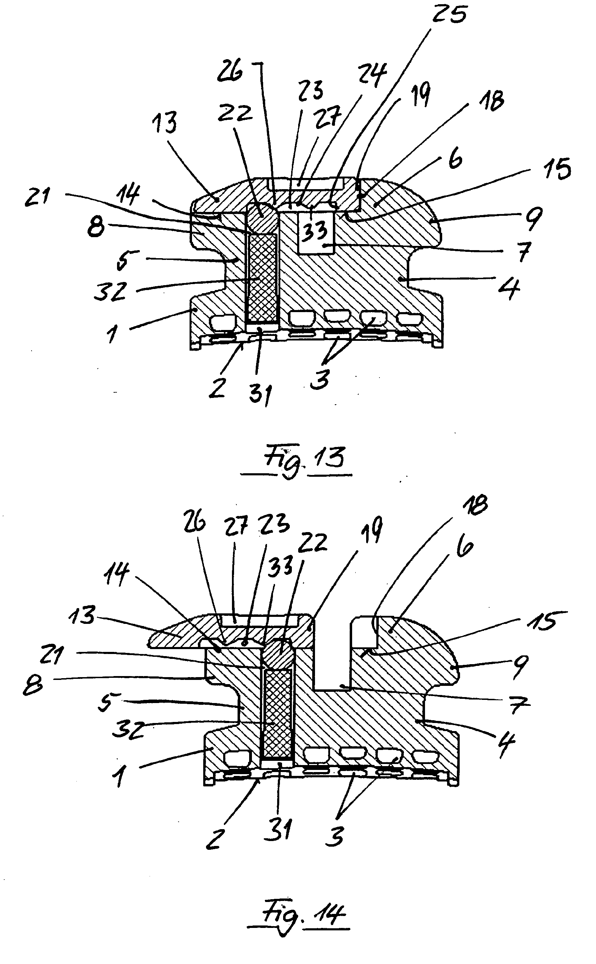

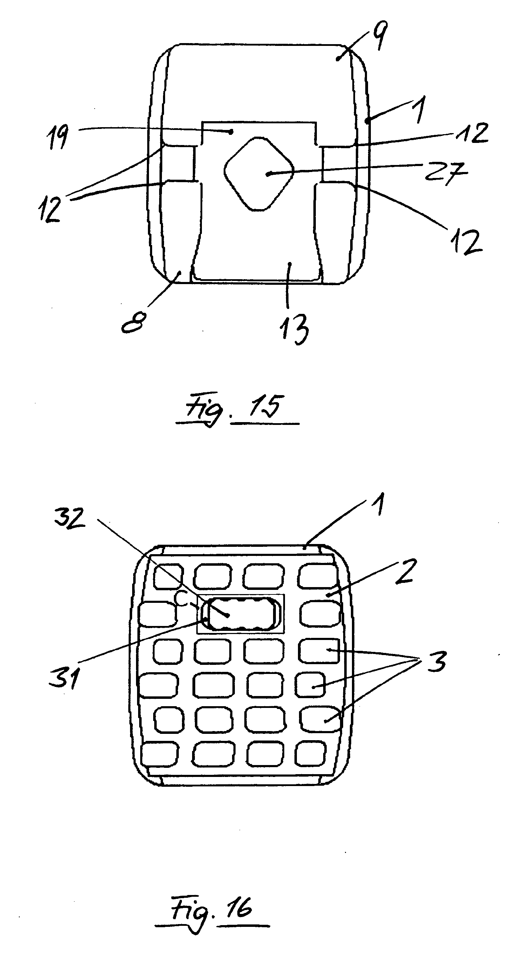

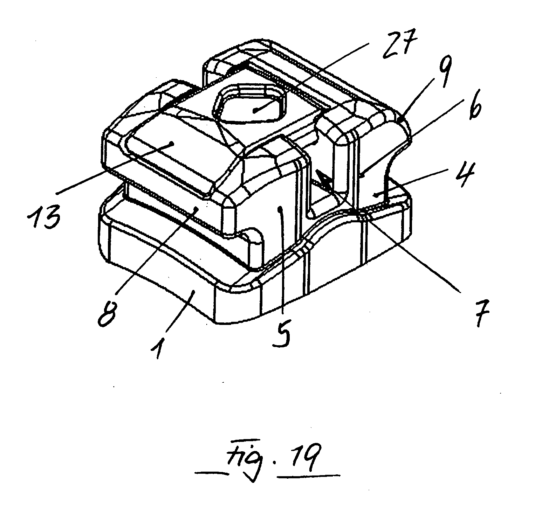

Das in den Figuren 13 bis 20 dargestellte Bracket hat große Ähnlichkeit mit den in den Figuren 1 bis 12 dargestellten Brackets. Die in den Figuren 1 und 2 dargestellten Ansichten gelten, abgesehen von geringen und für die vorliegende Erfindung unbedeutenden Abweichungen, auch für das in den Figuren 13 bis 20 dargestellte dritte Bracket.

Das dritte Bracket unterscheidet sich von dem in den Figuren 1 bis 10 dargestellten ersten Bracket im wesentlichen darin, dass der zylindrische Strang 22 nicht aus einem elastomeren Kunststoff, sondern aus einem keramischen Werkstoff besteht und dass der Stopfen 32, welcher den zylindrischen Strang 22 unterstützt, nicht aus einer Keramik oder dergleichen unnachgiebigem Werkstoff besteht, sondern aus einem elastomeren Kunststoff. Wenn beim Verschieben des Schiebers 13 zwischen seiner offenen Stellung (Figur 14) und seiner geschlossenen Stellung (Figur 13) die Vorsprünge 26 und 33, welche an der Unterseite des Schiebers 13 ausgebildet sind, auf den Strang 22 treffen, kann der Strang 22 nur deshalb ausweichen und in den Schlitz 31 zurückweichen, weil die von den Vorsprüngen 26 und 23 auf den Strang 22 ausgeübten Kräfte auf den Stopfen 32 übertragen werden und dieser infolge seines elastomeren Verhaltens nachgeben kann, indem er durch Stauchen verformt wird. Damit das möglich ist, ist der Querschnitt des Stopfens 32 in einem unmittelbar an den Strang 22 anschließenden Abschnitt kleiner ausgebildet als der lichte Querschnitt des Schlitzes 31, welcher von der Unterseite 2 der Basis des Brackets durchgeht bis zum Grund 20 der im Bracketkörper vorgesehene Ausnehmung 14, in welcher der Schieber 13 angeordnet ist.

Der Stopfen 32 ist durch Kleben in dem Schlitz 31 fixiert. Der Klebstoff kann zu diesem Zweck von der Unterseite 2 des Brackets her in den Schlitz 31 eingefüllt werden. Das untere Ende des Stopfens 32 ist in einem Abstand von der Unterseite 2 des Brackets angeordnet, wodurch unter dem Stopfen 32 ein Freiraum gebildet ist, welcher den Klebstoff aufnehmen kann.

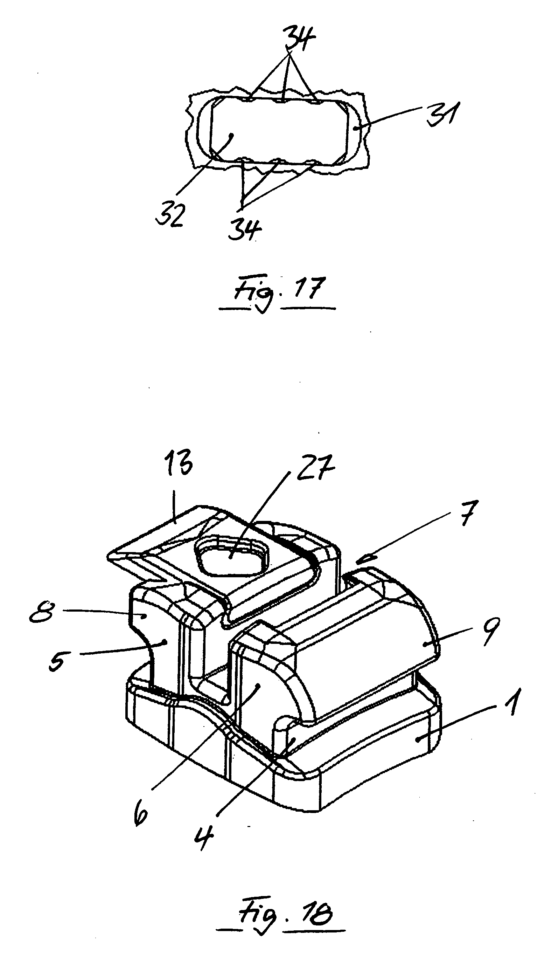

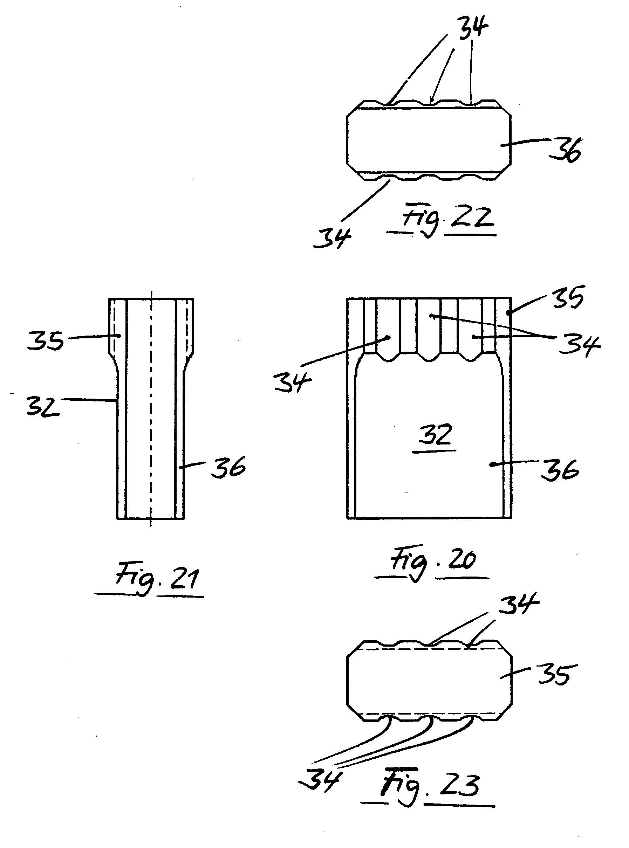

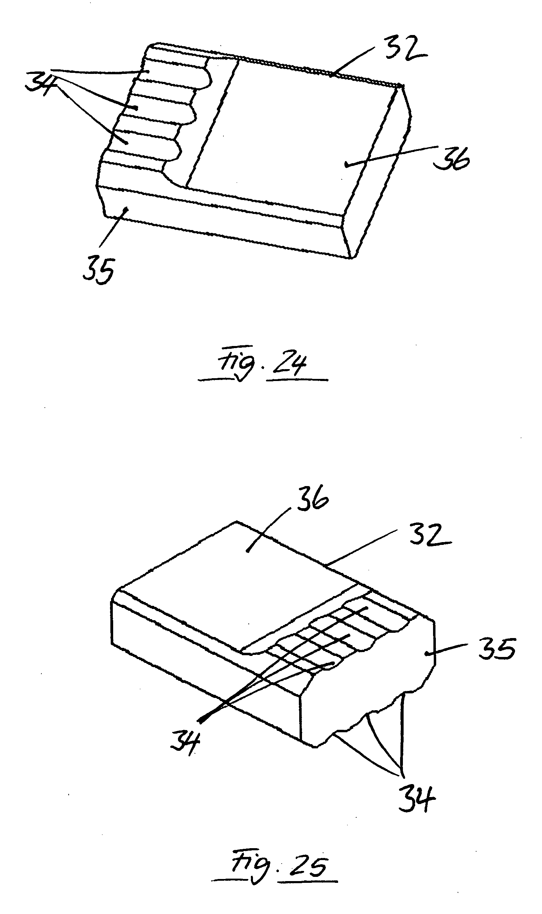

Wie sich aus den Figuren 20 bis 25 ergibt, hat der Stopfen 32 einen Sockel 35, welcher auf seinen beiden Breitseiten Rillen 34 aufweist, welche sich in Richtung lingual-labial erstrecken. Der Sockel 35 steckt spielfrei in dem Schlitz 31, siehe Figur 17. Ein Teil des Klebstoffs, welcher von der Unterseite 2 des Brackets her in den Schlitz 31 eingefüllt wird, dringt in die Rillen 34 ein und verbessert die Haftung des Stopfens 32 in dem Schlitz 31. An den Sockel 35 schließt ein schmalerer Abschnitt des Stopfens 32 an, welcher Abstand von den Wänden des Schlitzes 31 hat, wodurch ein Freiraum gegeben ist, in welchen hinein der schmalere Abschnitt 36 beim Stauchen des Stopfens 32 reversibel verformt werden kann.

Zum Betätigen des Schiebers 13 hat dieser auf seiner labialen Oberseite eine rautenförmige Vertiefung 27, ähnlich der rautenförmigen Vertiefung 27 im zweiten Ausführungsbeispiel gemäß den Figuren 11 und 12.

**Bezugszahlen**

| | | | |
|---|---|---|---|
| 1 | Basis | 34 | Rillen in 32 |
| 2 | Unterseite | 35 | Sockel von 32 |
| 3 | Vertiefungen | 36 | schmalerer Abschnitt von 32 |
| 4 | Sockel | | |
| 5 | gingivale Wand | | |
| 6 | okklusale Wand | | |
| 7 | Nut, Slot | | |
| 8 | gingivaler Ligaturenflügel | | |
| 9 | okklusaler Ligaturenflügel | | |
| 10 | Drahtbogen | | |
| 11 | Grund von 7 | | |
| 12 | Kanten von 7 | | |
| 13 | Schieber | | |
| 14 | labiale Ausnehmung in 5 | | |
| 15 | labiale Ausnehmung in 6 | | |
| 16 | Hinterschnitte | | |
| 17 | Grund von 15 | | |
| 18 | zweiter Anschlag | | |
| 19 | vorderes Ende von 13 | | |
| 20 | Grund von 14 | | |
| 21 | (schlitzförmige) Ausnehmung in 5 | | |
| 21a | Oberfläche von 21 | | |
| 21b | Oberfläche von 21 | | |
| 22 | Strang | | |
| 23 | Ausnehmung in der Unterseite von 13 | | |
| 24 | Grund von 23 | | |
| 25 | Anschlag, erster Anschlag | | |
| 26 | Vorsprung auf 24 | | |
| 27 | Vertiefung | | |
| 31 | Schlitz | | |
| 32 | Stopfen | | |
| 33 | Vorsprung | | |

## Patentansprüche

1. Ein selbstligierendes Bracket für die Orthodontie hat
eine Basis (1)
eine von der Basis (1) ausgehende okklusale Wand (6) mit wenigstens einem okklusalen Ligaturenflügel (9),
eine von der Basis (1) ausgehende gingivale Wand (5) mit wenigstens einem gingivalen Ligaturenflügel (8),
eine Nut (7), welche die okklusale Wand (6) und die gingivale Wand (5) voneinander trennt und sich durchgehend in Richtung von mesial nach distal erstreckt, und einen Schieber (13), welcher in einer in der okklusalen Wand (6) und/oder in der gingivalen Wand (5) vorgesehenen Führung (14-17) gehalten und in der Führung (14-17) zwischen einer Schließstellung, in welcher der Schieber (13) die Nut (7) überbrückt, und einer Offenstellung, in welcher die Nut (7) in labialer Richtung offen ist, in Richtung gingival-okklusal verschiebbar ist,
und Mittel, die den Schieber (13) sowohl in seiner Schließstellung als auch in seiner Offenstellung halten können,
**gekennzeichnet durch** folgende weitere Merkmale:
es ist wenigstens eine längliche Ausnehmung (21) vorgesehen, deren Längsrichtung parallel zur Längsrichtung der Nut (7) verläuft und in welcher ein unnachgiebig ausgebildeter Strang (22) liegend angeordnet ist, welcher eine Mantelfläche hat, in der Ausnehmung (21) unterstützt ist, mit seiner dem Schieber (13) abgewandten Seite an einem elastisch oder elastomer nachgebenden Widerlager (32) liegt und infolge eines elastischen oder elastomeren Rückstellvermögens einer Bewegung des Schiebers (13) ausweichen kann;
die wenigstens eine Ausnehmung (21) ist in der gingivalen Wand (5) und/oder in der okklusalen Wand (6) des Brackets vorgesehen und hat eine dem Schieber (13) zugewandte Öffnung, aus welcher der Strang (22) mit einem Abschnitt seiner Mantelfläche nach außen vorsteht;
an dem Schieber (13) ist ein erster Anschlag (25) vorgesehen, welcher in der Offenstellung des Schiebers (13) an der Mantelfläche des Stranges (22) anschlägt;
an jener Seite des Schiebers (13), welche dem Strang (22) zugewandt ist, ist an diesem Schieber (13) ein Vorsprung (26) vorgesehen und so angeordnet, dass er beim Verschieben des Schiebers (13) in seine Schließstellung vor dem Einnehmen der Schließstellung zunächst an der Mantelfläche des Stranges (22) anschlägt, ehe der Schieber (13) seine Schließstellung einnehmen kann, indem sein Vorsprung (26) den Strang (22) überwindet;
zu beiden Seiten des Vorsprungs (26) ist genügend Raum vorhanden, um den aus der Ausnehmung (21) vorstehenden Abschnitt des Strangs (22) aufzunehmen;
am Bracket ist ein zweiter Anschlag (18) vorgesehen, an welchem der Schieber (13) in seiner Schließstellung anschlägt, nachdem sein Vorsprung (26) den Strang (22) überwunden hat.

2. Bracket nach Anspruch 1, **dadurch gekennzeichnet, dass** der Strang (22) wegen des elastisch oder elastomer nachgebenden Widerlagers (32) der Bewegung des Schiebers ausweichen kann.

3. Bracket nach einem der vorstehenden Ansprüche, **dadurch gekennzeichnet, dass** die Länge der Ausnehmung (21) kleiner ist als die Breite des Schiebers (13).

4. Bracket nach einem der vorstehenden Ansprüche, **dadurch gekennzeichnet, dass** der Strang (22) in der gingivalen oder in der okklusalen Wand (5) des Brackets liegt und dass der zweite Anschlag (18) an der ihr gegenüberliegenden Wand (6) des Brackets ausgebildet ist, wobei es besonders bevorzugt ist, wenn der Strang (22) in der gingivalen Wand (5) vorgesehen und der zweite Anschlag (18) an der okklusalen Wand (6) vorgesehen ist.

5. Bracket nach einem der vorstehenden Ansprüche, **dadurch gekennzeichnet, dass** der Schieber (13) mit seinem vorderen Ende (19) am zweiten Anschlag (18) anschlägt.

6. Bracket, nach einem der vorstehenden Ansprüche, **dadurch gekennzeichnet, dass** der Strang (22) eine zylindrische Mantelfläche hat.

7. Bracket nach einem der vorstehenden Ansprüche, **dadurch gekennzeichnet, dass** der Strang (22) höchstens mit seinem halben Umfang aus der Öffnung der Ausnehmung (21) ragt und vorzugsweise nur mit wenig mehr als seinem halben Umfang in der Ausnehmung (21) liegt.

8. Bracket, nach einem der vorstehenden Ansprüche, **dadurch gekennzeichnet, dass** der Strang (22) ohne seitliches Spiel in der Ausnehmung (21) liegt.

9. Bracket nach einem der vorstehenden Ansprüche, **dadurch gekennzeichnet, dass** der Strang (22) aus einer Keramik besteht.

10. Bracket nach einem der vorstehenden Ansprüche, **dadurch gekennzeichnet, dass** der Bracketkörper aus Aluminiumoxid besteht, wohingegen der Schieber (13) aus einer Keramik mit höherer Festigkeit als Aluminiumoxid besteht, insbesondere aus Zirkonoxid.

11. Bracket nach einem der vorstehenden Ansprüche, **dadurch gekennzeichnet, dass** die Ausnehmung (21) durch einen Schlitz (31) gebildet ist, welcher sich von der dem Schieber (13) zugewandten Öffnung durchgehend bis zur Unterseite der Basis (1) des Brackets erstreckt, und dass in dem Schlitz (31) das Widerlager in Form eines Stopfens (32) steckt, an welchem sich der Strang (22) abstützt.

12. Bracket nach Anspruch 11, **dadurch gekennzeichnet, dass** das Widerlager (32) den gesamten Querschnitt des Schlitzes (31) einnimmt.

13. Bracket nach Anspruch 11 oder 12, **dadurch gekennzeichnet, dass** das Widerlager (32) Rillen (34) hat, welche in Richtung von der Basis (1) zum Schieber (13) verlaufen.

14. Bracket nach einem der Ansprüche 11 is 13 in Verbindung mit Anspruch 3, **dadurch gekennzeichnet, dass** das Widerlager (32) in der Weise abgestuft ausgebildet ist, dass es in unmittelbarer Nachbarschaft des Strangs (22) den Querschnitt der Ausnehmung (21) nur teilweise ausfüllt.

## Claims

1. A self-ligating bracket for use in orthodontics has a base (1),
an occlusal wall (6) extending from the base (1) and having at least one occlusal ligature wing (9),
a gingival wall (5) extending from the base (1) and having at least one gingival ligature wing (8),
a slot (7) separating the occlusal wall (6) and the gingival wall (5) from one another and extending continuously in the mesial-to-distal direction,
and a slide (13) retained in a guide (14-17) provided in the occlusal wall (6) and/or in the gingival wall (5) and displaceable in the guide (14-17) in a gingival-to-occlusal direction between a closed position, in which the slide (13) bridges the slot (7), and an open position, in which the slot (7) is open in a labial direction,
and means which can hold the slide (13) in both its closed position and its open position,
**characterised by** the following further features:
at least one elongate recess (21) is provided, the longitudinal direction of which runs parallel to the longitudinal direction of the slot (7) and in which an unyielding strand (22) lies, which has a lateral surface,
is supported in the recess (21), rests with its side facing away from the slide (13) against an elastically or
elastomerically yielding abutment (32), and can give way a movement of the slide (13) as a result of an elastic or
elastomeric resilience;
the at least one recess (21) is provided in the gingival wall (5) and/or in the occlusal wall (6) of the bracket and has an opening, which faces the slide (13) and from which the strand (22) protrudes outwardly with a portion of its lateral surface;
a first stop (25) is provided on the slide (13) and abuts against the lateral surface of the strand (22) in the open position of the slide (13);
a projection (26) is provided on the slide (13) on the side of said slide (13) facing the strand (22) and is arranged such that, during displacement of the slide (13) into its closed position, before adopting the closed position the projection first abuts against the lateral surface of the strand (22) before the slide (13) can adopt its closed position as a result of its projection (26) overcoming the strand (22);
sufficient space is available on both sides of the projection (26) for accommodating the portion of the strand (22) protruding from the recess (21);
a second stop (18) is provided on the bracket and the slide (13) abuts against said stop in its closed position once its projection (26) has overcome the strand (22).

2. The bracket according to Claim 1, **characterised in that** the strand (22) can give way the movement of the slide due to the elastically or elastomerically yielding abutment (32).

3. The bracket according to any of the preceding claims, **characterised in that** the length of the recess (21) is smaller than the width of the slide (13).

4. The bracket according to any of the preceding claims, **characterised in that** the strand (22) is arranged in the gingival or in the occlusal wall (5) of the bracket, and **in that** the second stop (18) is formed on the opposite wall (6) of the bracket, wherein it is particularly preferred if the strand (22) is provided in the gingival wall (5) and the second stop (18) is provided in the occlusal wall (6).

5. The bracket according to any of the preceding claims, **characterised in that** the slide (13) abuts the second stop (18) with its front end (19).

6. The bracket according to any of the preceding claims, **characterised in that** the strand (22) has a cylindrical lateral surface.

7. The bracket according to any of the preceding claims, **characterised in that** the strand (22) protrudes at most with half of its circumference from the opening of the recess (21) and preferably lies only with little more than half its circumference in the recess (21).

8. The bracket according to any of the preceding claims, **characterised in that** the strand (22) lies in the recess (21) without lateral play.

9. The bracket according to any of the preceding claims, **characterised in that** the strand (22) consists of a ceramic.

10. The bracket according to any of the preceding claims, **characterised in that** the bracket body consists of aluminium oxide, whereas the slide (13) consists of a ceramic of greater strength than aluminium oxide, in particular of zirconium oxide.

11. The bracket according to any of the preceding claims, **characterised in that** the recess (21) is formed by a slit (31), which extends continuously from the opening facing the slide (13) to the underside of the base (1) of the bracket, and **in that** the abutment fits in the slot (31) in the form of a plug (32), on which the strand (22) is supported.

12. The bracket according to Claim 11, **characterised in that** the abutment (32) occupies the entire cross section of the slot (31).

13. The bracket according to Claim 11 or 12, **characterised in that** the abutment (32) has channels (34), which run in the direction from the base (1) to the slide (13).

14. The bracket according to one of Claims 11 to 13 in conjunction with Claim 3, **characterised in that** the abutment (32) is stepped in such a way that it only partly fills out the cross section of the recess (21) in immediate proximity of the strand (22).

## Revendications

1. Support auto-ligaturant pour l'orthodontie, possédant une base (1)
une paroi occlusale (6) partant de la base (1), avec au moins une ailette de ligature occlusale (9),
une paroi gingivale (5) partant de la base (1), avec au moins une ailette de ligature gingivale (8),
une rainure (7) séparant la paroi occlusale (6) et la paroi gingivale (5) l'une de l'autre et s'étendant en continu dans la direction mésiale à distale,
et un poussoir (13) maintenu dans un guidage (14-17) prévu dans la paroi occlusale (6) et/ou dans la paroi gingivale (5), et déplaçable dans la direction gingivale-occlusale dans le guidage (14-17), entre une position de fermeture, dans laquelle le poussoir (13) passe par-dessus la rainure (7), et une position d'ouverture, dans laquelle la rainure (7) est ouverte dans la direction labiale,
et des moyens capables de maintenir le poussoir (13) aussi bien dans la position de fermeture que dans la position d'ouverture,
**caractérisé par** les particularités suivantes :
il est prévu au moins un évidement oblong (21), dont la direction longitudinale s'étend parallèlement à la direction longitudinale de la rainure (7) et dans lequel est disposée une gaine (22) rigide couchée,
laquelle possède une surface extérieure dans laquelle est soutenu l'évidement (21), s'applique sur un contre-appui flexible élastomère ou élastique (32) avec son côté détourné du poussoir (13) et peut éviter un mouvement du poussoir (13) grâce à sa capacité de rappel élastique ou élastomère ;
l'au moins un évidement (21) est prévu dans la paroi gingivale (5) et/ou dans la paroi occlusale (6) du support et possède une ouverture tournée vers le poussoir (13), par laquelle la gaine (22) fait saillie vers l'extérieur avec une section de sa surface extérieure ;
une première butée (25) est prévue sur le poussoir (13), laquelle bute contre la surface extérieure de la gaine (22) dans la position ouverte du poussoir (13) ;
du côté du poussoir (13) tourné vers la gaine (22), il est prévu une saillie (26) sur ce poussoir (13),
laquelle est agencée de manière à buter tout d'abord contre la surface extérieure de la gaine (22) lors du déplacement du poussoir (13) dans sa position de fermeture, avant l'atteinte de la position de fermeture, jusqu'à ce que le poussoir puisse adopter sa position de fermeture tandis que sa saillie (26) surmonte la gaine (22) ;
des deux côtés de la saillie (26), l'espace est suffisant pour accueillir la section de la gaine (22) faisant saillie hors de l'évidement (21) ;
il est prévu une deuxième butée (18) sur le support,
contre laquelle s'applique le poussoir (13) dans sa position de fermeture une fois que sa saillie (26) a surmonté la gaine (22).

2. Support selon la revendication 1, **caractérisé en ce que** la gaine (22) peut éviter le mouvement du poussoir grâce au contre-appui flexible élastique ou élastomère.

3. Support selon l'une des revendications précédentes, **caractérisé en ce que** la longueur de l'évidement (21) est inférieure à la largeur du poussoir (13).

4. Support selon l'une des revendications précédentes, **caractérisé en ce que** la gaine (22) se trouve dans la paroi gingivale ou dans la paroi occlusale (5) du support, et **en ce que** la deuxième butée (18) est formée sur la paroi (6) du support opposée à celle-ci, sachant qu'il est particulièrement préféré que la gaine (22) soit prévue dans la paroi gingivale (5) et que la deuxième butée (18) soit prévue sur la paroi occlusale (6).

5. Support selon l'une des revendications précédentes, **caractérisé en ce que** le poussoir (13) bute contre la deuxième butée (18) avec son extrémité avant (19).

6. Support selon l'une des revendications précédentes, **caractérisé en ce que** la gaine (22) possède une surface extérieure cylindrique.

7. Support selon l'une des revendications précédentes, **caractérisé en ce que** la gaine (22) fait saillie hors de l'ouverture de l'évidement (21) au maximum avec la moitié de son pourtour, et s'étend dans l'évidement (21) de préférence avec seulement un peu plus de la moitié de son pourtour.

8. Support selon l'une des revendications précédentes, **caractérisé en ce que** la gaine (22) s'étend dans l'évidement (21) sans jeu latéral.

9. Support selon l'une des revendications précédentes, **caractérisé en ce que** la gaine (22) est constituée de céramique.

10. Support selon l'une des revendications précédentes, **caractérisé en ce que** le corps de support est constitué d'oxyde d'aluminium, tandis que le poussoir (13) est constitué d'une céramique avec une solidité supérieure à celle de l'oxyde d'aluminium, en particulier d'oxyde de zirconium.

11. Support selon l'une des revendications précédentes, **caractérisé en ce que** l'évidement (21) est formé par une fente (31) s'étendant à partie de l'ouverture tournée vers le poussoir (13), en continu jusqu"au côté inférieur de la base (1) du support, et **en ce que** le contre-appui sous la forme d'un bouchon (32), sur lequel s'appuie la gaine (22), s'étend dans la fente (31).

12. Support selon la revendication 11, **caractérisé en ce que** le contre-appui (32) occupe la totalité de la section transversale de la fente (31).

13. Support selon la revendication 11 ou 12, **caractérisé en ce que** le contre-appui (32) comporte des cannelures (34) s'étendant dans la direction allant de la base (1) au poussoir (13) .

14. Support selon l'une des revendications 11 à 13, en association avec la revendication 3, **caractérisé en ce que** le contre-appui (32) est conçu de façon étagée, de manière à ne remplir que partiellement la section transversale de l'évidement (21) dans le voisinage immédiat de la gaine (22).
